# EUROPEAN PATENT APPLICATION

(11) **EP 0 695 954 A1**
(43) Date of publication of application: **07.02.1996**
(21) Application number: 95112119.3
(22) Date of filing: 02.08.1995
(51) Int. Cl.: G02B 5/08, C03C 17/34, H01S 3/08

(54) **Monolithic laser-mirror substrate**

(30) Priority: 04.08.1994 US 285837
(71) Applicant: HONEYWELL INC., Minneapolis Minnesota 55408 (US)
(72) Inventor: Ahonen, Robert G., Cedar, MN 55011 (US); Bergman, Clark, Roseville, MN 55113-5412 (US)
(74) Representative: Rentzsch, Heinz, Dipl.-Ing.

(57) **Abstract**

For making small mirrors for laser applications a relatively large substrate (10) is deposited with a mirror (15) to make a mirror-substrate combination (10, 15). Mirror assemblies (25A to 25D) of desired size are then cut out of the mirror-substrate combination. Savings occur in that only mirrors which meet quality standards are then subject to secondary processing for specific applications.

## Description

This invention relates to mirrors and more specifically to small mirrors used with lasers.

Previously, mirrors used in laser applications have been fabricated individually ("discrete fabrication") from start to finish. The first step was to machine and super polish mirror substrates. The second step was to clean the substrates and deposit mirrors on the super polished surface. Deposited laser mirrors typically consist of two transparent dielectric materials, one with a low index of refraction (eg., SiO₂) and the other with a high index of refraction (eg., TiO₂ or ZrO₂). These materials are deposited alternately to form a highly-reflective multi-period dielectric stack.

Handling large mirror substrates during discrete fabrication is relatively simple. However, handling smaller substrates, such as those having diameters on the order of 7.62 mm (0.30 inches) and a thickness of 0.51 mm (0.020 inches), can be very difficult.

A further problem with discrete fabrication of small mirrors is the close proximity of the substrate edges to the critical reflective surface. This increases the difficulty of super polishing and depositing mirrors having a low defect density.

A further problem arises in the field of ring laser gyros (RLG). A mirror is often mounted on a transducer for controlling the path length of the laser within the RLG. These so called transducer mirrors are subject to many stresses in operation and therefore must be robust.

Accordingly, it is an object of the present invention to provide a simpler and more reliable method of handling mirror substrates during processing. It is a further object of the present invention to reduce the labor content of mirror fabrication. The present invention reduces the cost of poor yields by placing the most difficult-to-control processes at the beginning. The invention decreases defect density in mirrors and provides a more robust transducer mirror.

The present invention is characterized in claim 1 and discloses a method of making small mirrors starting with a large monolithic substrate. First a monolithic substrate is fabricated. Next, the substrate is cleaned and coated with a mirror layer. Then discrete mirrors of the desired size are cored from the coated substrate. Finally, if necessary, secondary machining and deposition operations are done to complete mirror fabrication. Preferred details and embodiments of the invention are described in the dependent claims.

The basic fabrication steps are summarized as follows: First, a substrate significantly larger than the desired mirrors is machined and super polished on the mirror side. Next, the substrate is cleaned and coated with a dielectric mirror layer. Following a quick evaluation to determine defect density, mirrors are baked and coated with chromium or another non-contaminating metal. The chromium provides etch protection and mechanical protection and can serve as a marker to identify the back side of thin symmetrical mirrors. A glass cover plate is then bonded to the mirror side and, for some mirror types, the back side of the monolithic substrate. Mirrors are then core machined in the monolithic mirror laminates without breaking through the bottom cover plate. The cored mirror laminate is then etched to eliminate sidewall micro fractures produced by the coring process. Discrete mirrors are then removed from the cored mirror laminate and cleaned to remove the bonding material. At this stage, mirrors requiring secondary processing are completed; this may require removing the chromium layer(s). Finally, the chromium (if still present) is removed and the discrete mirrors are cleaned and evaluated.

For thin transducer mirrors, a second stress-balancing mirror is deposited on the back side of the monolithic substrate. This mirror flattens the substrate by balancing the strain caused by the compressive stress in the mirror on the super polished side. Cored transducer mirrors are flat because they have uniform co-extensive coatings on both sides of the substrate.

### BRIEF DESCRIPTION OF THE DRAWING

Figure 1A is a side view showing the structure of a thin film mirror-substrate assembly.

Figure 1B is a side view showing the mirror substrate assembly of figure 1A attached to a plate.

Figure 1C is a slice view of the mirror-substrate assembly of Figure 3.

Figure 1D shows an additional coating step which can be used to flatten thin mirrors. When used, this back-side coating is applied before laminating the mirror-substrate assembly to a cover plate (Fig. 1B).

Figure 1E shows an additional processing step which can be used to further protect the mirror surfaces during processing.

Figure 1F shows the additional processing step of Figure 1E applied to the transucer minor of Figure 1D.

Figure 2 is a zoom top view of a prior art minor.

Figure 3 is a top view of a monolithic mirror laminate after core machining discrete mirrors as shown in Figure 1A.

Figure 4 is a top view of a cored mirror after being removed from the mirror-substrate assembly.

### DETAILED DESCRIPTION OF THE PREFERRED EMBODIMENT

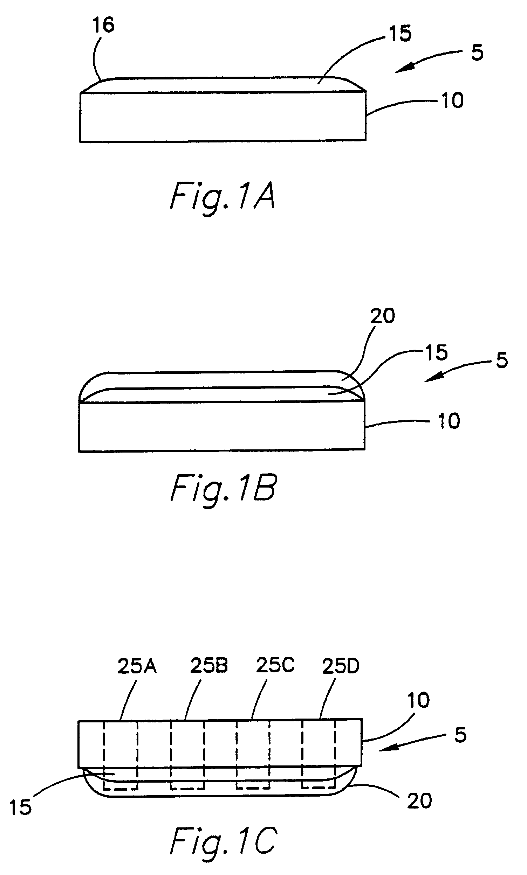

Referring now to Figure 1A, there shown is a mirror substrate assembly 5. The substrate 10 may be formed from a glass, such as BK-7 borosilicate glass, or other suitable material. A minor 15 is formed by depositing a low index of refraction material such as silicon dioxide (SiO₂) along with a high index of refraction material such as zirconium-silicon dioxide (ZrO₂-SiO₂) so that the index of refraction varies with distance from the mirror surface. Such a method of making a mirror is well known in the art. It may include a plurality of alternating high/low index of refraction layers.

In Figure 1B, a cover plate 20, which may be made of glass, has been temporarily bonded to the minor 15. This plate holds the individual mirrors together during coring and for subsequent processing. Glass is the preferred material: It is inexpensive, transparent and has similar machining and etching properties as the mirror substrates. Certain transparent ceramic materials would also be satisfactory.

A preferred method of bonding the cover plate, 20, to the mirror substrate is vacuum bonding with a thin wax layer. Wax is first applied by melting onto the heated surface of one of the mating parts. In some applications the mirror is on the bottom; in others, the cover plate is on the bottom. Alter degassing the wax, the mating part is placed on the molten wax. Then the encapsulated wax layer is further degassed (in a vacuum chamber) until few if any bubbles remain when the laminate is returned to ambient pressure. In some applications, a second cover plate is bonded to the laminate by repeating the above steps. In this case, the center part is the coated mirror substrate. Excess wax is removed by pressing the two plates together (eg., by using a weight). The laminate is allowed to cool until the wax hardens. Excess wax is removed from the surfaces of the laminate using an appropriate solvent.

Figure 1C illustrates mirrors 25A-D that have been core machined from a mirror-substrate assembly. Mirrors may be core machined by, for example, using a high speed, diamond tipped coring tool. In a preferred embodiment, the coring tool is operated at 12,000 rpm and is advanced 0,254 mm (0.01 inches) into the uncut material, then withdrawn, then advanced another 0,254 mm (0.01 inches) into the material, and so on, until reaching the desired cutting depth. Other possible methods of cutting the desired mirrors include ultrasonic and laser cutting tools.

Adequate coolant flow improves the quality of mirrors formed by core machining. Coolant is forced through the center of the coring tool at high pressure - high enough to flow by the working surfaces of the tool - 225 to 250 psi in a preferred embodiment. Core machining could stop within the bottom cover plate 20, leaving the plate with sufficient strength to hold the mirrors together during subsequent processing.

At this point, a etchant (not shown) may be used to eliminate micro-fractures in the sidewalls of the cored mirrors. For substrates 10 made of BK-7 glass, a etchant of ammonium bi-fluoride and ammonium fluoride is used. Eliminating the micro-fractures eliminates the possibility of macro-fractures occuring later in the process or, worst of all, when ring laser gyros are in the field.

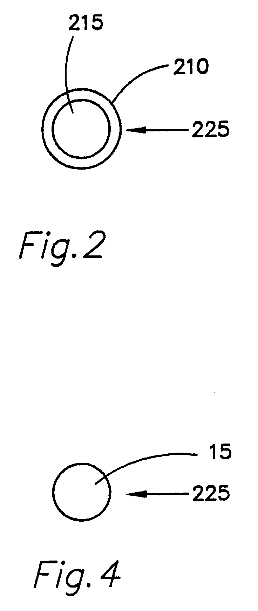

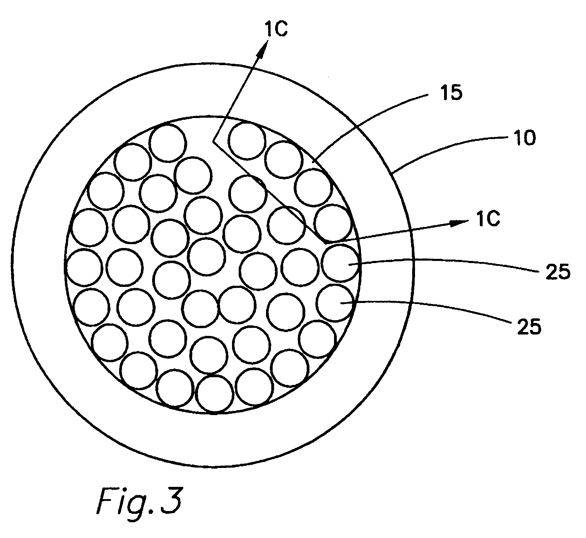

After etching, the glass plate 20 may be removed so that the mirrors can be installed in a RLG, or undergo further processing. First, the entire mirror substrate assembly is heated to liquid the wax. The plate is then removed and the wax is stripped of the discrete mirrors. The benefits of the entire process will be explained in connection with the description of Figures 2 and 3.

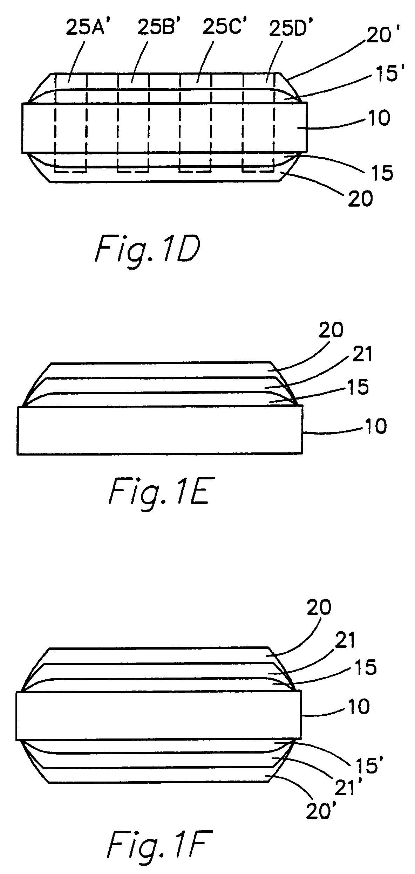

Figure 1D shows a special process used in the making thin "transducer" mirrors. A second minor 15' has been formed on a second side of substrate 10. The function of the second minor is to offset the strain in the substrate caused by the compressive stress in the first minor 15. Reasons for inclusion of the second mirror are further explained below. Both mirror coatings are overcoated with a protective metal such as chromium. Transducer mirrors are bonded between two cover plates, 20 and 20', before core machining. Mirror assemblies 25A', 25B', 25C' and 25D' are then cored out through one of the two plates, here the second cover plate 20', and into but not through the other cover plate, here the first cover plate 20. The cover plate 20' minimizes the size of edge chips caused by the coring tool as it enters the top surface of the mirror substrate; it also protects the mirror-coated surface during glass etching. A thin Cr coating prevents etching but etching occurs at pinholes in the Cr. The cover plate and wax bonding layer block access to these pinholes.

Figures 1E&F show the structures of Figures 1B and 1D respectively, but include extra protective layers 21 in Figure 1E, and 21 together with 21' in Figure 1F. The protective layers, which may be chromium, are used to prevent etching or mechanical damage from occurring to the mirrors during processing and also to mark the back side of thin transducer mirrors. The chromium is removed from the laser mirror surfaces prior to use.

Referring now to Figure 2, there shown is a top view of a discrete mirror 225 of the prior art. Note that the mirror coating 215 does not entirely cover the substrate 210. The substrate was supported by or held in position by the uncoated surface during deposition.

In Figure 3, mirrors 25, which may be approximately the same size as the prior art mirrors, are core machined from a mirror-substrate assembly which is substantially larger. In this way, as can be seen in Figure 4, mirrors can be fabricated with the mirror coating co-extensive with the substrate.

In Figure 1D, transducer mirror 25A'-D' is constructed from discrete substrate 10, and mirrors 15 and 15' which are mounted on opposite sides of the substrate. The second mirror 15' used to offset strain in thin transducer mirror substrates caused by compressive stress in the first mirror 15. Note however that, in normal mirror deposition neither mirror is exactly co-extensive with the substrate. Further, due to masking by the substrate holders and asymmetry in the arrival direction of coating vapor, the mirrors on opposite sides of the substrate can have different thicknesses near the perimeter. Different thicknesses means different stress levels and imperfect cancellation which leads to undesirable strain in the substrate. However, coring or transducer mirrors in this way leaves both mirrors approximately co-extensive with the substrate and co-extensive with each other. In this arrangement, the stresses of the two mirrors cancel thereby producing a very flat transducer mirror.

The novel process for producing high quality small mirrors insures that the risky steps of polishing the substrates and mirror formation can be quality checked before secondary processing is performed. An additional benefit is that early processing of large mirror substrate assemblies are easier to process than small mirror substrate assemblies.

## Claims

1. A method of making mirror assemblies having a desired size,
**characterized by** the steps of:
a) forming a substrate (10) having a first side;
b) forming a first mirror (15) on said first side of said substrate (10) to form a mirror-substrate combination (10, 15); and
c) cutting mirror assemblies (25A to 25D) having a desired size from the mirror-substrate combination (10, 15).

2. The method of claim 1, **characterized by** bonding a first cover plate (20) to said first minor layer (15) prior to said cutting of monolithic mirror assemblies (25A to 25D); wherein said cutting of said mirror assemblies step leaves said mirror assemblies attached to said first cover plate (20).

3. The method of claim 2, **characterized b**y coating said first minor (15) with an etch protectant (21) prior to attaching said first plate (20); and etching the mirror assemblies to eliminate micro-fractures created in said cutting mirror assemblies step.

4. The method of one of the preceding claims, **characterized by** the further steps of:
a) forming said substrate (10) with a second side; and
b) forming a second mirror (15') on said second side of said substrate (10).

5. The method of claim 4, **characterized by** the further steps of:
attaching a first cover plate (20) to said first mirror (15) and a second cover plate (20') to said second mirror (15') prior to said cutting of mirror assemblies; wherein said cutting of said mirror assemblies (25A to 25D) step leaves said mirror assemblies attached to one (20) of said first and second plates (20, 20').

6. The method of claim 5, **characterized by**:
a) coating said first and second mirrors (15, 15') with an etch protectant (21, 21') prior to attaching said first and second plates (20, 20'); and
b) etching the mirror assemblies to eliminate micro-fractures created in said cutting mirror assemblies step.

7. The method of one of the preceding claims, **characterized by** polishing and cleaning the substrate (10) before forming a mirror.

8. The method of one of the preceding claims, wherein said cutting step is performed by coring said mirror (25A to 25D) from said mirror-substrate assembly (15, 21, 20, 10; 15', 21', 20', 10).

9. The method of claim 8, wherein said coring step comprises the further steps of:
(A) advancing a coring tool into the mirror substrate assembly a predetermined distance;
(B) removing the coring tool; and
(C) repeating steps (A) and (B) until a desired depth is achieved.

10. The method of claim 8 or 9, **characterized by** cooling said mirror substrate assembly during coring.
